# EUROPEAN PATENT APPLICATION

(11) **EP 2 431 410 A1**
(43) Date of publication of application: **21.03.2012**
(21) Application number: 11181593.2
(22) Date of filing: 16.09.2011
(51) Int. Cl.: C08J 9/232, C08J 9/00, C08L 25/06

(54) **Sunlight-resistant expanded styrene-polymerised sheets with high heat insulation value**

(30) Priority: 17.09.2010 BE 201000557
(71) Applicant: Technisch Bureel Panigo N.V., 8830 Hooglede (BE)
(72) Inventor: Vereecke, Thierry, 8500 Kortrijk (BE)
(74) Representative: De Clercq, Ann G. Y.

(57) **Abstract**

The present invention relates to a composition comprising a mixture of at least two different types of expandable styrene-polymerised beads, wherein the first normally-pigmented type of beads comprises 3 to 25 weight% of athermanous particles with respect to the polymer, and wherein the second slightly-pigmented type of beads comprises 0.05 to 2.5 weight% of athermanous particles with respect to the polymer, and wherein the athermanous particles are preferably homogeneously distributed in the expandable styrene-polymerised beads.

## Description

### Technical field

This invention discloses a new composition of expandable styrene-polymerised beads which enables the manufacture of a foamed element with an optimum thermal conductivity coefficient and/or density and which is not sensitive to deformation under the influence of sunlight.

### Background of the invention

Foamed insulating elements made from expandable styrene-polymerised beads are a well-known heat insulation product. It is manufactured by bringing expandable beads, that may already be pre-foamed, in a steam chamber where the whole is foamed under the influence of steam. With the foaming in the steam chamber, the beads further expand whereby at the same time they start to stick to each other and eventually slightly merge into each other. After cooling, the foamed insulating element can be taken out of the steam chamber as a whole.

The shape of the inside of the steam chamber determines the shape of the foamed insulation element. Because of this, it is possible to manufacture foamed insulation elements which have a specific shape. Normally, the inside of the steam chamber will have a rectangular cubic shape. In that case, the foamed insulating element will also have a cubic shape which can subsequently be cut by means of a hot wire or a knife, in the shape of sheets.

The most important parameter for determining the properties of foamed insulation elements of styrene-polymerised beads is the density of the foamed element. It influences to a large degree the compression strength, flexural strength and breaking strength and the thermal conductivity coefficient. An increase in density is accompanied by an increase in compression, breaking and flexural strength and by a decrease in thermal conductivity coefficient.

The usual density of the foamed elements manufactured from expandable styrene polymerisation beads ranges between 8 and 40 kg/m³. However, due to economical and material-saving measures, it is desirable to keep the density as low as possible. However, because of this, the thermal conductivity coefficient has a too high value. This material will have a thermal conductivity coefficient, at a density of 15 kg/m³, of more than 0.035 W / (m K).

A possible solution is presented in European patent applications No. 0981574 B1 and 0902804 A1 where respectively graphite or carbon black is added during the production of expandable styrene-polymerised beads. The graphite or carbon black will be homogeneously distributed in the polymer matrix of the resulting foamed insulation element. Because of this, the thermal conductivity coefficient will decrease. Thus, according to EP 0981574 B1, a foamed insulation element which is manufactured from expandable styrene-polymerised beads with graphite and with a density of 10 kg/m³, will have a thermal conductivity coefficient lower than 0.035 W / (m K). This is clearly an improvement with respect to the above mentioned value of more than 0.035 at a density of 15 kg/m³. Besides graphite and carbon black, one may also add metal oxide or metal powder to obtain the same effect.

The thermal conductivity coefficient decreases because the graphite and/or carbon black and/or metal oxide and/or metal powder absorbs the heat radiation. Otherwise, these would give a heat loss and hence, would be responsible for an increase of the thermal conductivity coefficient. Substances which absorb this radiation are called athermanous substances.

However, in practice it has been shown that, when a particular foamed insulation element to which an athermanous substance has been added, is exposed for a certain time to the sun, the insulation element tends to deform. This is especially detrimental in applications where exterior walls or cavity walls are being isolated. When these elements as sheets are placed next to each other, deformation of each sheet separately may lead to the appearance of openings or a roughness near the joints. When e.g. a plaster layer is applied onto these insulation sheets, these openings may initiate tears in the plaster layer. These openings also have a detrimental effect on the insulation value of the product.

European patent application No. 1,783,161 offers a solution hereto to produce foamed insulation elements by using, during foaming, a mixture of normally-pigmented (graphite, carbon black, metal oxides and metal powder) expandable styrene-polymerised beads and of non-pigmented expandable styrene-polymerised beads. It appears from this that the addition of a fraction of non-pigmented beads which are not so sensitive to deformation under the influence of sunlight, is sufficient to safe-guard the whole for this detrimental effect. This insulation element will have a thermal conductivity coefficient which ranges between the values of the coefficients of insulation elements made from entirely non-pigmented and entirely normally-pigmented beads.

In that application, it was shown that a foamed insulation element made of an unordered mixture of normally-pigmented and non-pigmented beads (50 weight% - 50 weight%) does not noticeably deform under the influence of sunlight.

Another problem of foamed insulation elements of styrene-polymerised beads is that these are not environmentally degradable. Also, the limited natural petroleum resources are a large problem for this type of product. The building blocks of the styrene-polymerised beads are synthesised by a reaction of styrene and ethylene which are both produced from petroleum. Therefore, it is important that these raw materials are used as economically as possible.

The present invention relates to a new insulating foamed element which is made from at least two different types of expandable styrene-polymerised beads. The first type of expandable beads contains between 3 and 25 weight%, with respect to the polymer, of athermanous particles which are preferably homogeneously distributed in the expandable styrene-polymerised bead. The second type is an expandable bead which contains between 0.05 and 2.5 weight%, with respect to the polymer, of athermanous particles which are preferably homogeneously distributed in the styrene-polymerised bead.

The foamed element of the present invention can have a thermal conductivity coefficient which more closely resembles that of an analogously foamed isolation element made from 100 % normally-pigmented beads in comparison to the element as described in European patent application No. 1783161.

The foamed element of the invention can especially be produced in the form of sheets to easily thermally insulate buildings and the like. This form of insulation can also be used as sound insulation. Nevertheless, the present invention does not exclude other possible shapes; spherical or "customized" elements can be produced.

### Summary

The present invention relates to a new composition which enables the manufacture of a foamed element which is not sensitive to deformation under the influence of sunlight and which has a thermal conductivity coefficient which more closely resembles the thermal conductivity coefficient of a foamed element consisting of 100 % normally-pigmented expandable beads than the usual foamed sunlight-resistant insulation elements consisting of normally-pigmented and non-pigmented expanded or expandable beads.

In a first aspect, the invention relates to a composition comprising a mixture of at least two different types of expandable styrene-polymerised beads, wherein the first normally-pigmented type of beads comprises 3 to 25 weight% of athermanous particles with respect to the polymer, and wherein the second slightly-pigmented type of beads comprises 0.05 to 2.5 weight% of athermanous particles with respect to the polymer, and wherein the athermanous particles are preferably homogeneously distributed in the expandable styrene-polymerised beads.

The present invention also relates to a composition as described above, comprising 4 to 90 weight% of slightly-pigmented expandable styrene-polymerised beads and 96 to 10 weight% of normally-pigmented expandable styrene-polymerised beads.

The present invention also relates to a composition as described above, wherein the athermanous particles are selected from the group of graphite particles, carbon black particles, metal oxide particles, metal particles, or combinations thereof.

The present invention also relates to a composition as described above, wherein the normally-pigmented beads and the slightly-pigmented beads have a different density.

The present invention also relates to a composition as described above, wherein the normally-pigmented beads have a density between 8 and 40 kg/m³, and the slightly-pigmented beads have a density between 8 and 40 kg/m³.

In a second aspect, the invention relates to a foamed element, obtained by foaming of a composition as above described.

The present invention also relates to a foamed element as described above, wherein the positioning of the slightly-pigmented expandable styrene-polymerised beads is random or ordered with respect to the normally-pigmented expandable styrene-polymerised beads.

The present invention also relates to a foamed element as described above, wherein the positioning of the slightly-pigmented expandable styrene-polymerised beads is ordered with respect to the normally-pigmented expandable styrene-polymerised beads, comprising two or more layers having at least one layer consisting of about 100 weight% of slightly-pigmented expandable styrene-polymerised beads, and another layer consisting of about 100 weight% of normally-pigmented expandable styrene-polymerised beads.

The present invention also relates to a foamed element as described above, consisting of two or more layers wherein at least one layer consists of a mixture of slightly-pigmented expandable styrene-polymerised beads and normally-pigmented expandable styrene-polymerised beads.

In a third aspect, the invention relates to the use of a composition as described above or of a foamed element as described above, for the production of thermal insulation material or sound insulation material.

In a fourth aspect, the invention is related to sheets formed from the above described foamed element.

In a fifth aspect, the invention relates to a method for obtaining a foamed element as described above, comprising the following steps :
- mixing a slightly-pigmented bead containing 0.05 to 2.5 weight% with respect to the polymer of athermanous particles, wherein the athermanous particles are preferably homogeneously distributed in the expandable styrene-polymerised beads, with a normally-pigmented bead containing 3 to 25 weight% with respect to the polymer of athermanous particles, wherein the athermanous particles are preferably homogeneously distributed.
- foaming the mixture to a foamed element.

Therefore, the present invention also relates to a method for obtaining a foamed element as described above, wherein the mixture is foamed to a foamed element.

### Detailed description of the invention

Before the present compositions of the invention are described, it is to be understood that this invention is not limited to particular compositions described, since such compositions may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise. By way of example, "a particle" means one particle or more than one particle.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

Throughout this application, the term "about" is used to indicate that a value includes the standard deviation of error for the device or method being employed to determine the value.

The recitation of numerical ranges by endpoints includes all integer numbers and, where appropriate, fractions subsumed within that range (e.g. 1 to 5 can include 1, 2, 3, 4 when referring to, for example, a number of elements, and can also include 1.5, 2, 2.75 and 3.80, when referring to, for example, measurements). The recitation of end points also includes the end point values themselves (e.g. from 1.0 to 5.0 includes both 1.0 and 5.0). Any numerical range recited herein is intended to include all sub-ranges subsumed therein.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions can be included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

The present invention is directed to the production of foamed insulation elements by using, when foaming, a mixture of normally-pigmented expandable styrene-polymerised beads (with 3 to 25 weight% of athermanous substances) and slightly-pigmented expandable styrene-polymerised beads (with 0.05 to 2.5 weight% of athermanous substances). As used herein, weight% of athermanous substance in a bead is calculated with respect to the total weight of the bead. According to the present invention, the weight% of athermanous substances in the normally-pigmented expandable styrene-polymerised beads may amount to 3, 4, 5, 6, 7, 8, 9, 10, 11, 12, 13, 14, 15, 16, 17, 18, 19, 20, 21, 22, 23, 24 or 25 %. On the other hand, according to the present invention, the weight% of athermanous substances in the slightly-pigmented expandable styrene-polymerised beads may amount to 0.05, 0.06, 0.07, 0.08, 0.09, 0.1, 0.2, 0.3, 0.4, 0.5, 0.6, 0.7, 0.8, 0.9, 1.0, 1.1, 1.2, 1.3, 1.4, 1.5, 1.6, 1.7, 1.8, 1.9, 2.0, 2.1, 2.2, 2.3, 2.4 or 2.5 %.

The slightly-pigmented bead can have a slightly lower thermal conductivity coefficient than the non-pigmented bead and can be less sensitive to deformation under the influence of sunlight. A foamed insulation element obtained by foaming a mixture consisting of slightly-pigmented expandable styrene-polymerised beads (preferably from 4 weight% to 90 weight%) and normally-pigmented beads (preferably from 96 weight% to 10 weight%), can also be less sensitive to deformation under the influence of sunlight and can also have a thermal conductivity coefficient which more closely resembles the thermal conductivity coefficient of foamed insulation element consisting of 100 % normally-pigmented expandable beads. According to the present invention, in the mixture as described above, the weight% of slightly-pigmented expandable styrene-polymerised beads may amount to 4, 5, 6, 7, 8, 9, 10, 11, 12, 13, 14, 15, 16, 17, 18, 19, 20, 21, 22, 23, 24, 25, 26, 27, 28, 29, 30, 31, 32, 33, 34, 35, 36, 37, 38, 39, 40, 41, 42, 43, 44, 45, 46, 47, 48, 49, 50, 51, 52, 53, 54, 55, 56, 57, 58, 59, 60, 61, 62, 63, 646, 56, 66, 67, 68, 69, 70, 71, 72, 73, 74, 75, 76, 77, 78, 79, 80, 81, 82, 83, 84, 85, 86, 87, 88, 89, or 90 %. Hence, in the mixture as described above, the weight% of the normally-pigmented expandable styrene-polymerised beads may amount to 96, 95, 94, 93, 92, 91, 90, 89, 88, 87, 86, 85, 84, 83, 82, 81, 80, 79, 78, 77, 76, 75, 74, 73, 72, 71, 70, 69, 68, 67, 66, 65, 64, 63, 62, 61, 60, 59, 58, 57, 56, 55, 54, 53, 52, 51, 50, 49, 48, 47, 46, 45, 44, 43, 42, 41, 40, 39, 38, 37, 36, 35, 34, 32, 31, 30, 29, 28, 27, 26, 25, 24, 23, 22, 21, 20, 19, 18, 17, 16, 15, 14, 13, 12, 11 or 10 %. As used herein, weight% of styrene-polymerised beads in a mixture or composition is calculated with respect to the total weight of the mixture or composition.

The densities of the slightly- and normally-pigmented beads do not need to be the same (they may be the same or different): these may be freely selected and generally range between 8 kg/m³ and 40 kg/m³. According to the present invention, the density of the beads may be selected from 8, 9, 10, 11, 12, 13, 14, 15, 16.17, 18, 19, 20, 21, 22, 23, 24, 25, 26, 27, 28, 29, 30, 31, 32, 33, 34, 35, 36, 37, 38, 39 and 40 kg/m³.

The slightly-pigmented expandable styrene-polymerised bead is an inevitable intermediate product in the production process of non-pigmented and pigmented styrene-polymerised beads. Indeed, when switching over from the non-pigmented to the normally-pigmented beads or vice versa, this production process is not halted because of economical reasons. This implies that in between always a slightly-pigmented styrene-polymerised bead is produced. This slightly-pigmented bead has a too high thermal conductivity coefficient to be sold as pigmented bead and often cannot be mixed with the non-pigmented bead for foaming because of the colour difference. The production of foamed elements from 100 % slightly-pigmented beads is less interesting because of a too little demand or a too complex supply system of beads to the steam chamber when foamed elements from 100% non-pigmented or 100% slightly- pigmented beads are produced next to each other.

Since there is a large continuous demand for both non-pigmented foamed (packaging) and normally-pigmented foamed elements (insulation), there can also always be available an amount of slightly-pigmented expandable beads.

Moreover, the slightly-pigmented bead can also be used after pre-expansion to insulate cement mixtures, to fill up sitting bags, etc. However, these applications all imply a loss of use value of the slightly-pigmented bead since this are the traditional routes of recycling. The slightly-pigmented beads can also still be used for this application after the lifetime of the insulation element.

In short, it is clear that with this invention the insulation value can very closely resemble the one of a foamed insulation element of 100 % expandable normally-pigmented styrene-polymerised beads, but that the foamed insulation elements according to this invention are less sensitive to deformations under the influence of exposure to sunlight in contrast to the normally-pigmented element. It can be added that our invention partially consists of an intermediate product for which otherwise no high grade applications are available. Because of this, the intermediate product can be used to its full extent and precious petroleum may be saved. As the thermal conductivity coefficient of slightly-pigmented beads is lower than of non-pigmented beads, the insulation value of a foamed element made of a mixture of slightly-pigmented and normally-pigmented beads can be somewhat higher than the insulation value of an analogous mixture of non-pigmented and normally-pigmented beads.

The positioning of the slightly-pigmented expanded styrene-polymerised beads with respect to the normally-pigmented beads which constitute the foamed insulation elements, as described in this invention, may be both random or ordered such that a pattern is formed. The foamed insulation element may consist of 2 or more layers wherein the top layer consists of 100 weight% (or about 100 weight%) of a slightly-pigmented bead and the other layer consist of 100 weight% (or about 100 weight%) of a normally-pigmented bead. Because of this, less deformation by sunlight can appear.

Moreover, the top layer may also consist of a mixture of slightly- and normally-pigmented beads which does not deform under the influence of sunlight. In this way, a better insulation value in the top layer can be obtained.

Another possibility is that another layer consists of a mixture of slightly- and normally-pigmented beads.

When several layers are used, the densities of the individual layers do not need to be the same. Hence, a slightly-pigmented top layer may also have a higher density than a normally-pigmented layer. Consequently, the top layer may have better mechanical properties and thereby offer more protection to the normally-pigmented layer.

Therefore, it is also possible for both the slightly- and normally-pigmented layer to separately select a density. Preferably, this density ranges between 8 kg/m³ and 40 kg/m³.

It is obvious that the description of the present invention within its scope may relate to alternative embodiments of the invention.

## Claims

1. Composition comprising a mixture of at least two different types of expandable styrene-polymerised beads, wherein the first normally-pigmented type of beads comprises 3 to 25 weight% of athermanous particles with respect to the polymer, and wherein the second slightly-pigmented type of beads comprises 0.05 to 2.5 weight% of athermanous particles with respect to the polymer, and wherein the athermanous particles are preferably homogeneously distributed in the expandable styrene-polymerised beads.

2. Composition according to claim 1, comprising 4 to 90 weight% of slightly-pigmented expandable styrene-polymerised beads and 96 to 10 weight% of normally-pigmented expandable styrene-polymerised beads.

3. Composition according to any one of the preceding claims 1 to 2, wherein the athermanous particles are selected from the group of graphite particles, carbon black particles, metal oxide particles, metal particles, or combinations thereof.

4. Composition according to any one of the preceding claims 1 to 3, wherein the normally-pigmented beads and the slightly-pigmented beads have a different density.

5. Composition according to claim 4, wherein the normally-pigmented beads have a density between 8 and 40 kg/m³, and the slightly-pigmented beads have a density between 8 and 40 kg/m³.

6. A foamed element, obtained by foaming a composition according to any one of the preceding claims 1 to 5.

7. The foamed element according to claim 6, wherein the positioning of the slightly-pigmented expandable styrene-polymerised beads is random or ordered with respect to the normally-pigmented expandable styrene-polymerised beads.

8. The foamed element according to claim 7, wherein the positioning of the slightly-pigmented expandable styrene-polymerised beads is ordered with respect to the normally-pigmented expandable styrene-polymerised beads, comprising two or more layers having at least one layer consisting of about 100 weight% of slightly-pigmented expandable styrene-polymerised beads, and another layer consisting of about 100 weight% of normally-pigmented expandable styrene-polymerised beads.

9. The foamed element according to claim 7, consisting two or more layers wherein at least one layer consists of a mixture of slightly-pigmented expandable styrene-polymerised beads and normally-pigmented expandable styrene-polymerised beads.

10. Use of a composition according to any one of the preceding claims 1 to 5, or of a foamed element according to any one of the preceding claims 6 to 9, for the production of thermal insulation material or sound insulation material.

11. Sheets formed from a foamed element according to any one of the preceding claims 6 to 9.

12. Method for obtaining a foamed element according to any one of the claims 6 to 9, wherein the mixture obtained, consisting of a composition according to any one of the claims 1 to 5, is foamed to a foamed element.
